# EUROPEAN PATENT SPECIFICATION

(11) **EP 4 114 727 B1**
(45) Date of publication and mention of the grant of the patent: **23.08.2023**
(21) Application number: 20830329.7
(22) Date of filing: 14.12.2020
(51) Int. Cl.: B64C 39/02, B64D 47/08, B64U 101/30

(54) **SUPPORT SYSTEM FOR THE ACCESSORY OF A DRONE**
TRÄGERSYSTEM FÜR DAS ZUBEHÖR EINER DROHNE
SYSTÈME DE SUPPORT POUR ACCESSOIRE D'UN DRONE

(30) Priority: 04.03.2020 IT 202000004588
(43) Date of publication of application: 11.01.2023
(73) Proprietor: Nhoe S.r.l., 00040 Pomezia (RM) (IT); Siralab Robotics S.r.l., 05100 Terni (TR) (IT); Pasta, Roberto, 00040 Pomezia (RM) (IT); Feroli, Michele, 05022 Amelia (TR) (IT)
(72) Inventor: PASTA, Roberto, 00040 Pomezia RM (IT); FEROLI, Michele, 05022 Amelia TR (IT)
(74) Representative: Manna, Sara
(86) International application number: PCT/IB2020/061902
(87) International publication number: WO 2021/176269

(56) References cited:
- WO-A1-2017/141154
- CN-A- 109 573 034
- US-A- 5 365 291
- US-A1- 2010 219 295
- US-A1- 2020 062 418

## Description

### Technical field of the invention

The present invention relates to the mechanical sector and refers to a support system for moving an accessory element of a drone.

In the context of the present application, a drone means an aeroplane (aircraft) with or without a pilot, i.e. autonomous or not.

The support system can be installed on a drone, in particular at a lower portion of the fuselage, and is configured to selectively allow the extraction and insertion of the accessory element with respect to the fuselage drone. The system can be actuated by a single motor which is able to move the support system up to a certain angle and then the same, through a passive system, continues the rotation to the final position. This actuation is reversible. The support system can also be actuated by the presence of a movement mechanism that can be activated passively, i.e. as a function of an external stress acting on the system itself, and not (or not only) as a function of an automatic control of the system or a command by the operator.

### Background

The accessory systems aboard on drones, in particular optical ground observation systems such as cameras or radar, may need to be placed inside the fuselage or in another area inside the drone, which offers protection from external obstacles, at least when the systems are not in use.

As known in the art, such accessory systems primarily need to be positioned at the bottom of the drone. According to this positioning, maximum visibility of the overflown land is guaranteed. However, safety in this region of the drone is critical during take-off or landing, and the accessory system may accidentally come into contact with rough terrain or other obstacles, whether the drone is taking off vertically or in gliding mode. In particular, a small gliding drone in a take-off or landing scenario in non-airport areas emphasizes these criticalities. Furthermore, the systems boarded on drones typically comprise sophisticated instrumentation, which can result in a significant part of the costs of the entire drone for smaller drones.

In view of the above issue, very complex mechanisms are generally used to extract the accessory systems from inside the drone, which can be activated by the pilot or automatically during take-off and landing phases.

For example, US2020/062418 A1 discloses a UAV payload module retraction mechanism comprising member to bias the payload out of its housing and an elongated flexible drawing member, coupled between the housing and a winch attached to the payload, capable of being drawn by the winch to retract the payload within the housing.

WO2017/141154 A1 discloses a belly-mounted retraction mechanism for a payload in a fixed wing UAV that mechanically gets locked in retracted and deployed positions to prevent unintended movements of the payload due to gravitational pull or inertia forces.

To date, such mechanisms provide an actuation lacking the ability to manage a potential risk of error. It may occur, indeed, that the system remains in the extracted position during the critical landing/take-off phases due to malfunction or failure, and this involves potential damage. Such damage may not only require repairs to the accessory system, which is often the most valuable component of the drone, but also impair the success of the mission.

### Summary of the invention

The technical problem posed and solved by the present invention is therefore to overcome the drawbacks above mentioned with reference to the prior art.

This objective is achieved by means of a support assembly as defined in independent claim 1.

Preferred features of the present invention are the subject of the dependent claims.

The present invention provides a support system comprising a mobile housing module of an accessory component of a drone, for example a camera. The support system is configured to selectively allow, during use, the extraction of the housing module, and therefore of the accessory, with respect to the fuselage drone (for example to allow the correct positioning of the camera outside the drone and make aerial shooting), and to automatically retract the same within the fuselage in the event of a drone hitting an obstacle.

The support system can therefore switch from a maximum encumbrance configuration, which corresponds to a position in which the accessory carried by the housing module is at a maximum distance from the drone, to a minimum encumbrance configuration, which corresponds to a minimum distance position. of the accessory from the drone, and in which the housing module is preferably inserted - or at least partially inserted - within the drone itself.

In other words, during use, the housing module is selectively removable and automatically retractable (or retractable) with respect to the drone when the latter collides with an obstacle.

The movement of the support system for its extraction from the drone can be delegated to a drive system controlled for example by a central unit in an automated manner, or by a user via remote control.

According to a first innovative aspect of the present invention, the support system comprises a movement mechanism of the housing module to bring the latter to the minimum encumbrance configuration (i.e. to retract it at least partially inside the fuselage drone) which can be activated passively. Passive activation is achieved by detecting a force or external stress acting on the accessory housing module, which has a predetermined intensity and/or direction of application. This external stress can be determined, for example, by the impact of the housing module (or of the accessory system housed therein, which in turn transmits a corresponding stress to the housing module) with an obstacle, for example a rough terrain if a situation is assumed of drone taking off/landing.

According to a second aspect of the invention, the passive activation is determined mechanically by the action of the aforementioned external stress, which is apt to cause the movement of the support module.

According to a third aspect of the invention, the movement mechanism comprises rotating means which connects the housing module to a frame element of the system, which is in turn connected or connectable in a fixed manner to the drone. The rotating means is apt to assume a first position of activation when the housing module is in extracted configuration, and a second position retracted or rest when the housing module is in retracted configuration.

According to a fourth aspect of the invention, the handling mechanism further comprises elastic return means operatively associated with rotating connection means.

The elastic return means is apt to assume a first fixed position when the housing module is in extracted configuration and a second fixed position when the housing module is in retracted configuration.

Advantageously, the configuration of the support assembly is such that when the housing module is in an extracted configuration - with the elastic return means in the first fixed position - and an external stress higher than a predetermined threshold value is applied thereto, the rotating connection means is configured to rotate according to a first direction of rotation. When the rotation of the rotating connection means is greater than a first predetermined maximum angle, the elastic feedback means associated therewith is moved from the first fixed position to a second fixed position.

When the connection means moves to the second fixed position, the housing module associated therewith is moved by the same until the latter reaches the retracted configuration, in which the accessory is at least partially inserted into the drone.

When the housing module is in the retracted configuration, to move it back into the extracted configuration, it is required to actuate the rotating connection means according to a second direction of rotation, opposite to the first. Rotating connection means is for this purpose operatively connected to traditional drive means, which can be of the electromechanical, hydraulic or pneumatic type.

Other advantages, characteristics and methods of use of the present invention will become apparent from the following detailed description of several embodiments, presented by way of non-limiting example.

### Brief description of the drawings

Reference will be made to the attached Figures, in which:
- Figures 1 and 2 respectively show a plan view and a side view of a preferred embodiment of a support assembly according to the present invention in a fully retracted configuration, associated with the lower fuselage portion of a drone;
- Figure 3 shows a detail of Figure 2;
- Figures 4 and 5 show respectively a plan view and a side view of the device of Figure 1 in a first partially retracted configuration;
- Figure 6 shows a detail of Figure 5;
- Figures 7 and 8 show respectively a plan view and a side view of the device of Figure 1 in a second partially retracted configuration;
- Figure 9 shows a detail of Figure 8;
- Figures 10 and 11 show respectively a plan view and a side view of the device of Figure 1 in a third partially retracted configuration;
- Figure 12 shows a detail of Figure 11;
- Figures 13 and 14 respectively show a top view and a side view of the device of Figure 1 in a fourth partially retracted configuration;
- Figure 15 shows a detail of Figure 14;
- Figures 16 and 17 show respectively a plan view and a side view of the device of Figure 1 in a fifth completely extracted configuration;
- Figure 18 shows a detail of Figure 17 which shows the mechanical limit stop of the system for the position of the completely extracted device;
- Figures 19 and 20 show respectively a plan view and a side view of the device of Figure 1 in a first partially extracted configuration;
- Figure 21 shows a detail of Figure 20;
- Figures 22 and 23 show a plan view and a respectively side view of the device of Figure 1 in a second partially extracted configuration;
- Figure 24 shows a detail of Figure 23;
- Figures 25 and 26 show respectively a plan view and a side view of the device of Figure 1 in a third partially extracted configuration;
- Figure 27 shows a detail of Figure 26;

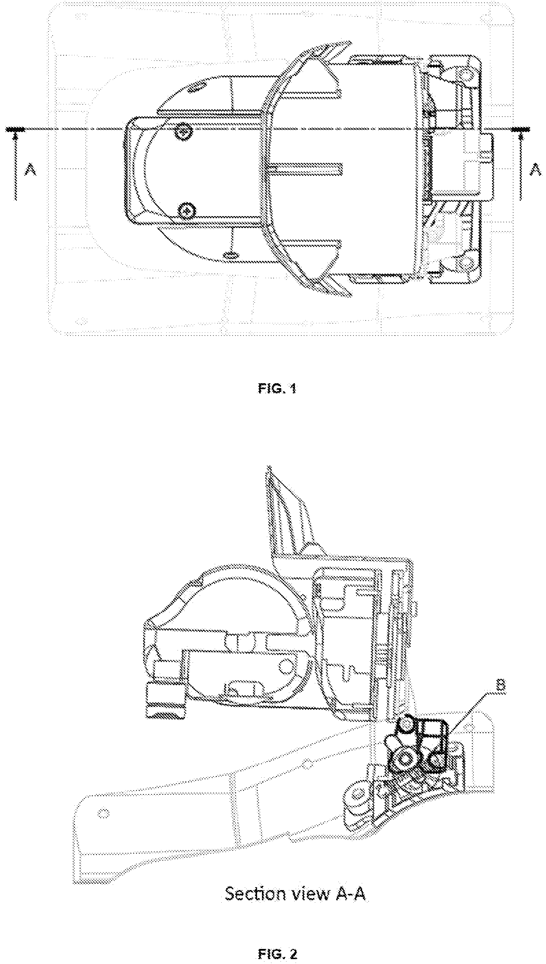

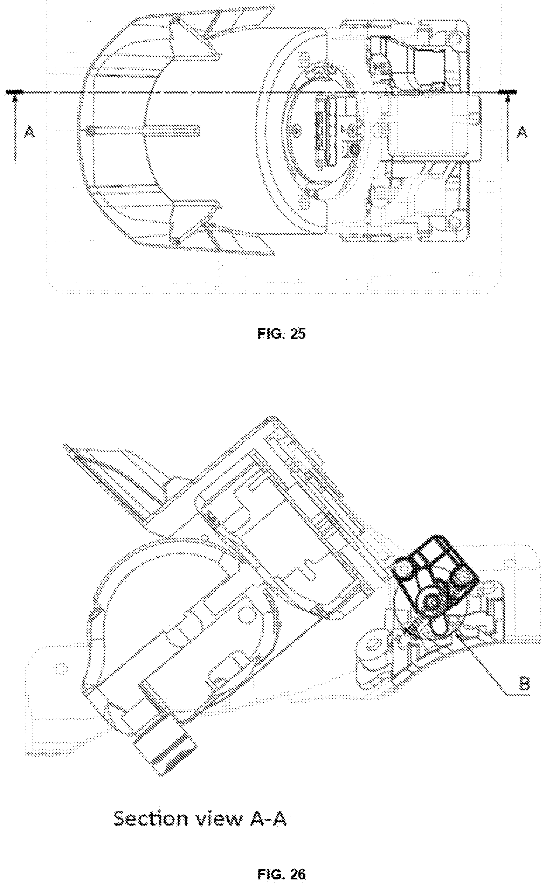

- Figures 25 and 26 show respectively a plan view and a side view of the device of Figure 1 in a fourth partially extracted configuration;

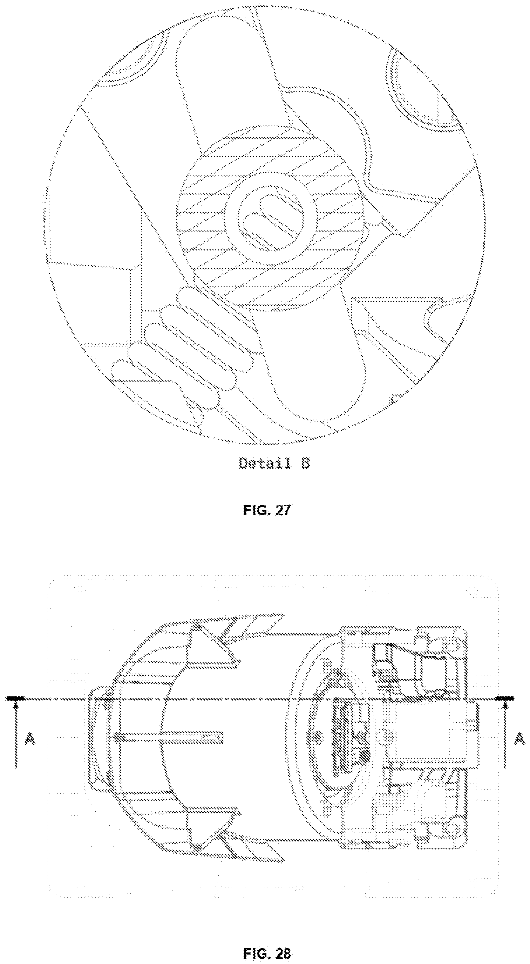

- Figure 27 shows a detail of Figure 26;

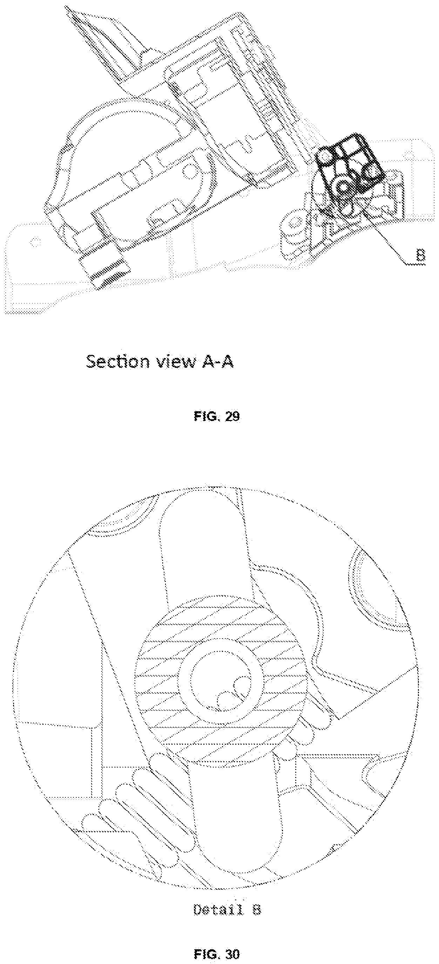

- Figures 28 and 29 show respectively a plan view and a side view of the device of Figure 1 in a fifth partially extracted configuration;
- Figure 30 shows a detail of Figure 29;

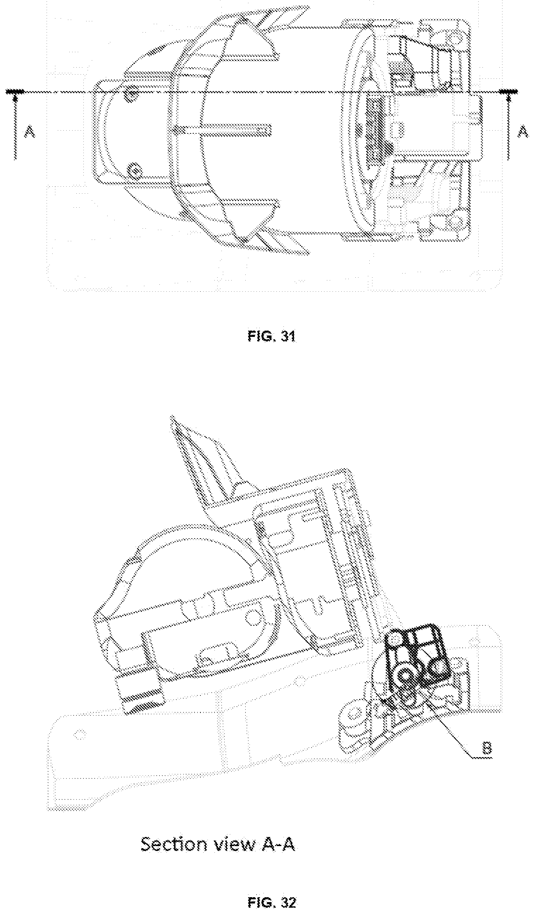

- Figures 31 and 32 show respectively a plan view and a side view of the device of Figure 1 in a sixth partially extracted configuration;

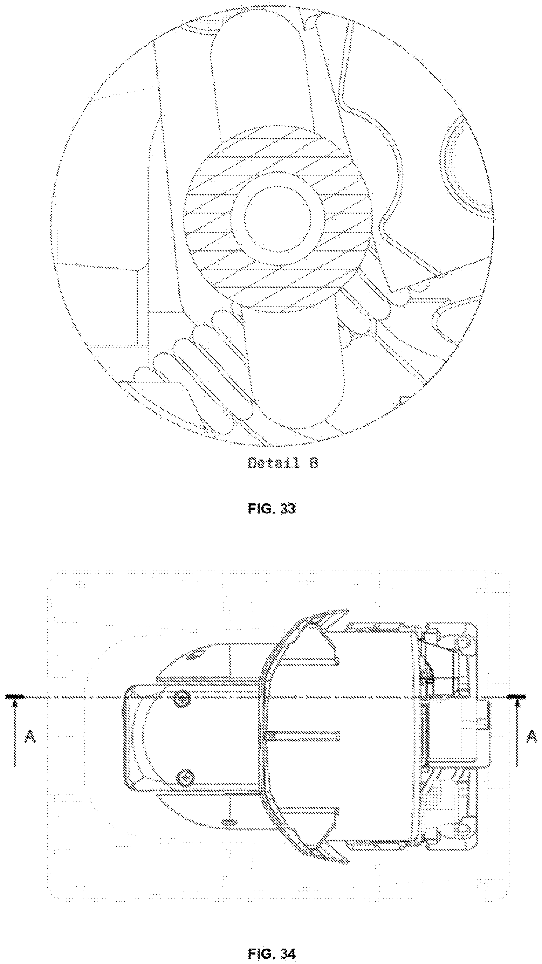

- Figure 33 shows a detail of Figure 32;

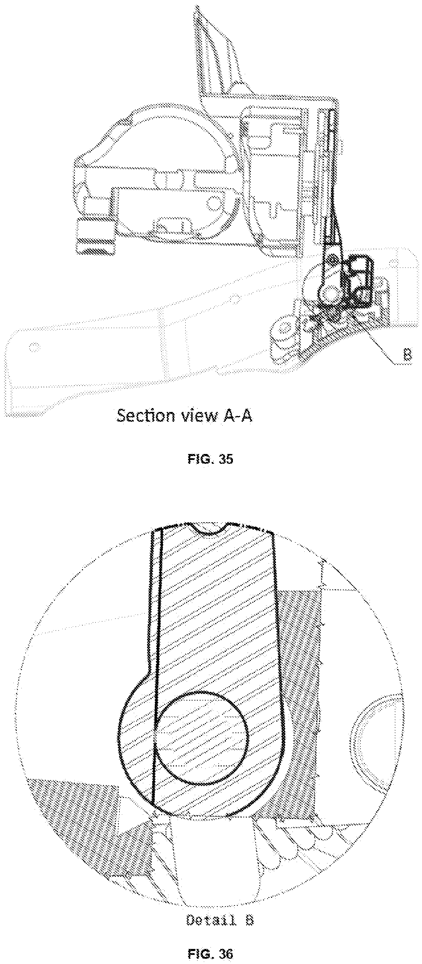

- Figures 34 and 35 show respectively a plan view and a side view of the device of Figure 1 in the fully retracted configuration;
- Figure 36 shows a detail of Figure 35 where it is shown the mechanical limit stop being reached for the completely retracted configuration;

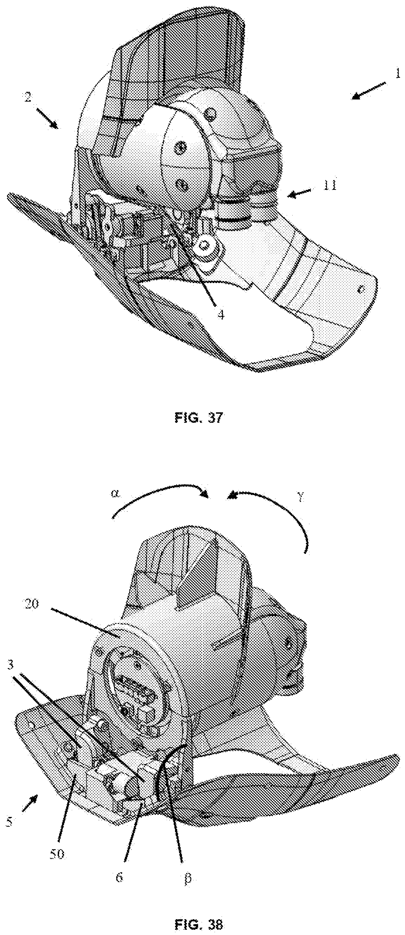

- Figures 37 and 38 show respectively a front perspective view and a rear perspective view of the device of Figure 1 in a completely retracted configuration with respect to the fuselage drone;

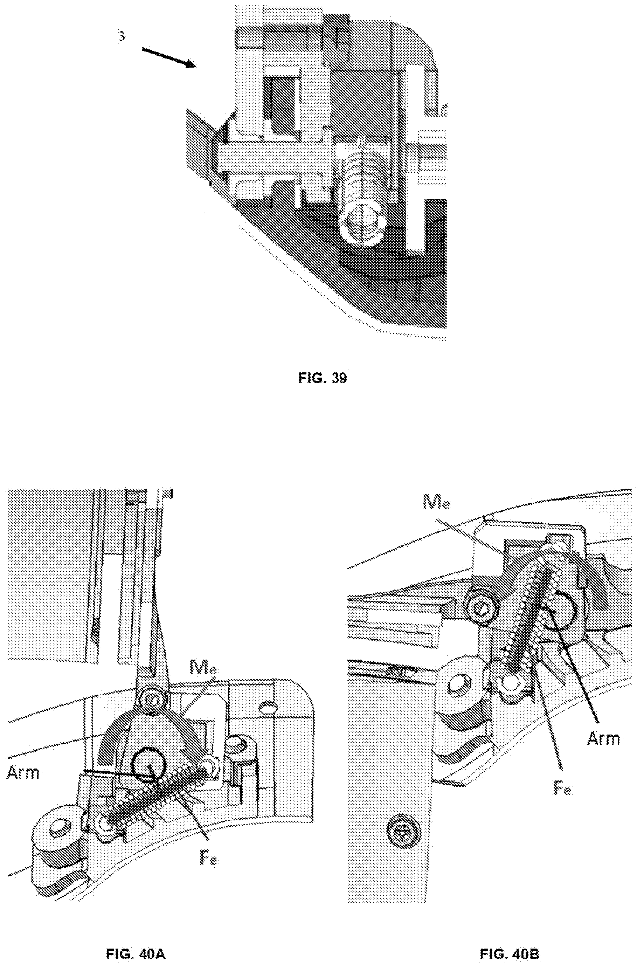

- Figure 39 shows in detail means for joining the device of Figure 1 to the fuselage drone;
- Figures 40A and 40B show in detail respectively the direction of the elastic force exerted by the elastic return means when the device of Figure 1 is in a minimum encumbrance configuration and in a maximum encumbrance position;

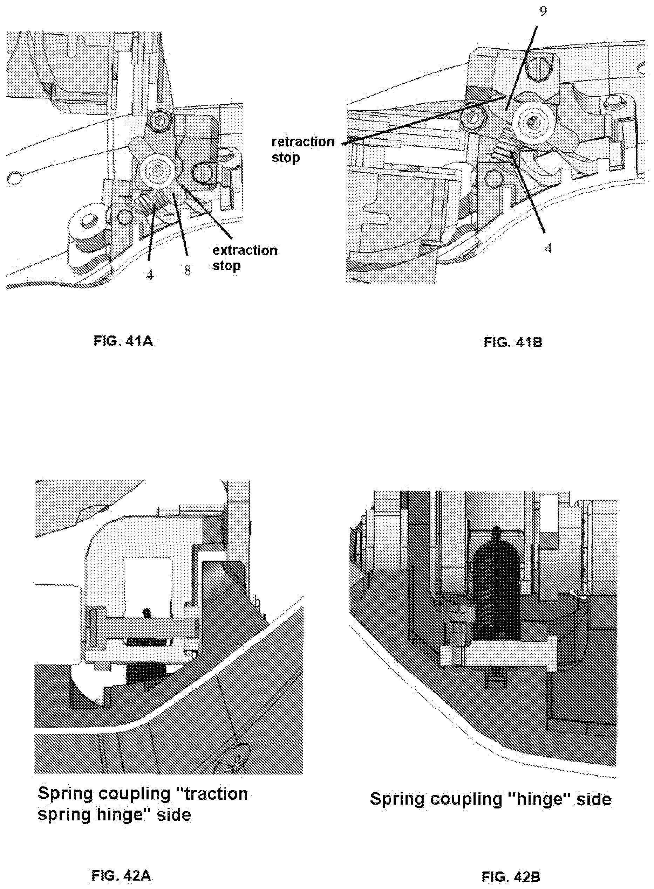

- Figures 41A and 41B respectively show in detail the position of the mechanical limit stop element that engages the elastic return means, at the minimum encumbrance position and the maximum encumbrance position of the device of Figure 1;
- Figures 42A and 42B show in detail respectively in detail a side view in longitudinal section and a rear view in cross section of a joint comprising the elastic return means;

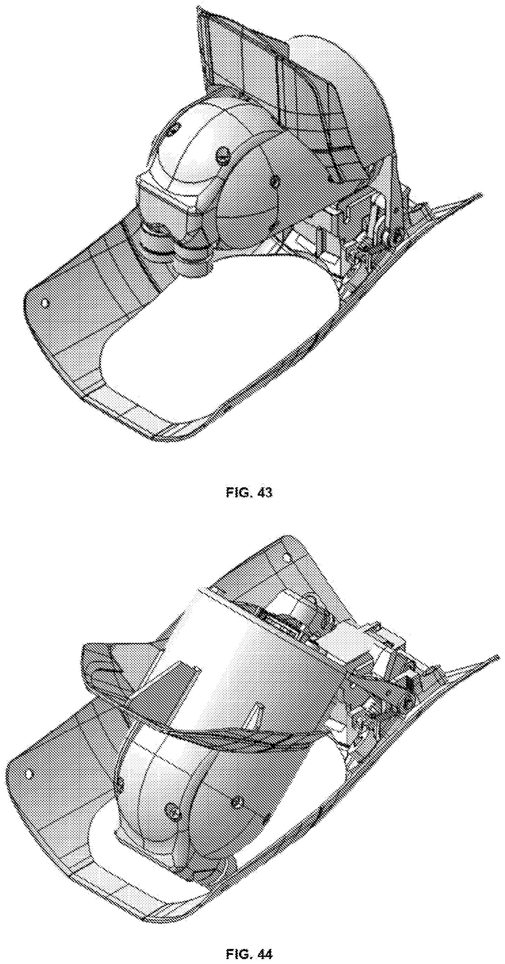

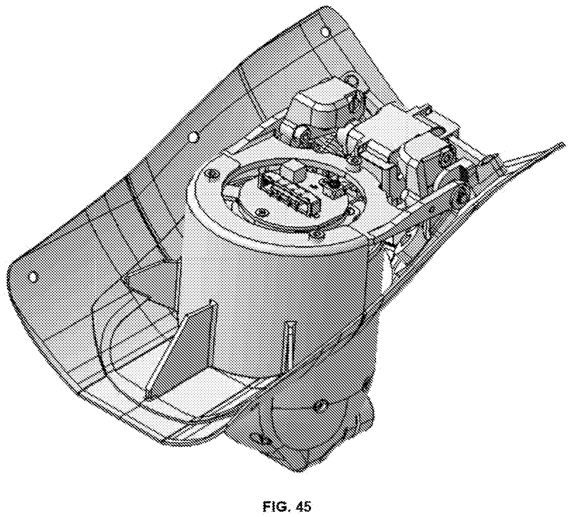

- Figures 43 to 45 show a sequence of three perspective views in which the system of the invention is respectively represented in retracted, partially extracted and completely extracted configuration.

The aforementioned Figures are purely intended for illustrative and non-limiting purposes.

### Detailed description of preferred embodiments

With reference initially to Figures 37 and 38, a preferred embodiment of a mobile support system according to the present invention is generally denoted by 1.

System 1 is configured to be connected to the fuselage of a drone at its own frame element 50, which can be mechanically connected to the lower internal portion of the fuselage.

The system 1 comprises a housing module 2 of an accessory element 11 of the drone, for example a camera. The housing module 2 has an operating surface, which can bear an *ad hoc* shaped seat to couple with the accessory element, denoted by 20 in Figure 38. The housing module 2 is operatively connected to a first portion 5 of the frame element 50.

Furthermore, the system 1 comprises the rotating connection means 3 and the elastic feedback means 4 configured to realize a retraction mechanism with passive activation of the housing module 2, as will be better described below.

System 1 is overall configured to assume a maximum encumbrance configuration, or operational configuration, and a minimum encumbrance configuration, or rest configuration.

In the maximum encumbrance configuration, during use, the operative surface 20 is oriented to form an operative angle β of minimum amplitude with the frame 50, preferably equal to about 90°. The operational angle β preferably subtends the rotating connection means 3 and the elastic return means 4. In the maximum encumbrance configuration, the operational angle β assumes a maximum value, preferably equal to about 180°. Therefore, the operational angle β has an amplitude increasing in the passage of system 1 from the minimum encumbrance configuration to the maximum encumbrance configuration.

More generally, the value of the operational angle β can be pre-set according to the specific construction needs (type of accessory system to be handled and its characteristics), for example by selecting the position of the limit stop elements which will be mentioned below.

In use, system 1 is preferably arranged at an opening existing on the fuselage, so that the movement of the housing module 2 allows the extraction of the accessory from the drone underparts at the maximum encumbrance configuration of system 1, and retract the same into the drone at the minimum encumbrance configuration.

As anticipated, system 1 comprises rotating connection means 3 of the housing module 2 to the first portion of frame 5 of system 1. The rotating connection means 3 may comprise a first element integral with housing module 2, a second element integral with the first portion of the frame 5 and a pivot element that engages them both, allowing the first element to rotate with respect to the second, an example of which is shown in Figure 39. The rotating connection means 3 is configured to assume a first extraction position when the housing module 2 is in extracted configuration and a second retraction position when the housing module 2 is in retracted configuration, which in use preferably coincides with the insertion of the accessory element 11 housed within the system 1 inside the drone fuselage.

The system 1 comprises elastic return means 4 operatively associated with the rotating connection means 3 and connected to a second portion 6 of the frame 50. The elastic return means may comprise for example one or more suitably sized springs. The elastic return means 4 is configured to assume a first rest position when the housing module 2 is in extracted configuration (Figure 40B) and a second rest position when the housing module 2 is in retracted configuration (Figure 40A). In particular, the elastic return means 4 is connected to the rotating connection means 3 at its first terminal end, and to the second portion of the frame 6 at its own second terminal end, as shown in Figures 42A and 42B.

The first and second rest positions coincide with respective stability positions of the elastic return means 4. In particular, the elastic return means is blocked from further displacements with respect to the aforementioned rest positions by the presence of a first and a second limit stop element, respectively denoted by 8 and 9 in Figures 41A and 41B.

The hinge allows that, during the passage from the retracted configuration to the extracted configuration, the elastic return means - more simply the springs denoted by 4 in Figure 41A and 41B - stretches due to the actuation of a suitably projected motor, which in turn makes the first limit stop element 8 rotate counter clockwise (with reference to the Figure), acting on the point called "extraction stop" in the Figures. The hinge is configured such that the spring 4 can 'cross' the rotation axis of the hinge itself, without interfering with the latter. In Figure 42B, it is better shown how the spring 4 can cross the hinge axis without creating mechanical interference with any other element.

In particular, the hinge axis shown in Figure 42B is composed of two portions (associated with two hinges) parallel to each other (i.e., hinges having coincident axes). When the spring is fully extended, the top dead point is reached, at which a single plane passing between the hinge axis and the extreme constraints of the spring 4 is defined. Afterwards, the stop position is lost due to the mechanism that continues in its motion, due to inability to position, in the direction of complete extraction, only due to the elastic force of the spring.

Vice versa, the actuation in order to retract the system is based on contact and thrust at the point called "retraction stop" in figure 41B, with the motor needing to 'push', consequently rotating the housing module around the hinge clockwise (with reference to the same Figure), extending the spring 4 and eventually reaching the lower dead centre, in which the hinge axis and the constraints of the spring are on a single plane. Subsequently, the spring 4 will tend to move into the rest configuration and will release the point called "retraction stop", moving the system to the fully retracted position.

The configuration of system 1 is such that, when the housing module 2 is in an extracted configuration and an external stress with an intensity higher than a predetermined threshold value is applied thereto (which can be modified according to the selection of the spring on behalf of greater or lesser sensitivity to external stress), the rotating connection means 3 is configured to rotate, according to a first direction of rotation, by an angle related to the reaction force of the springs.

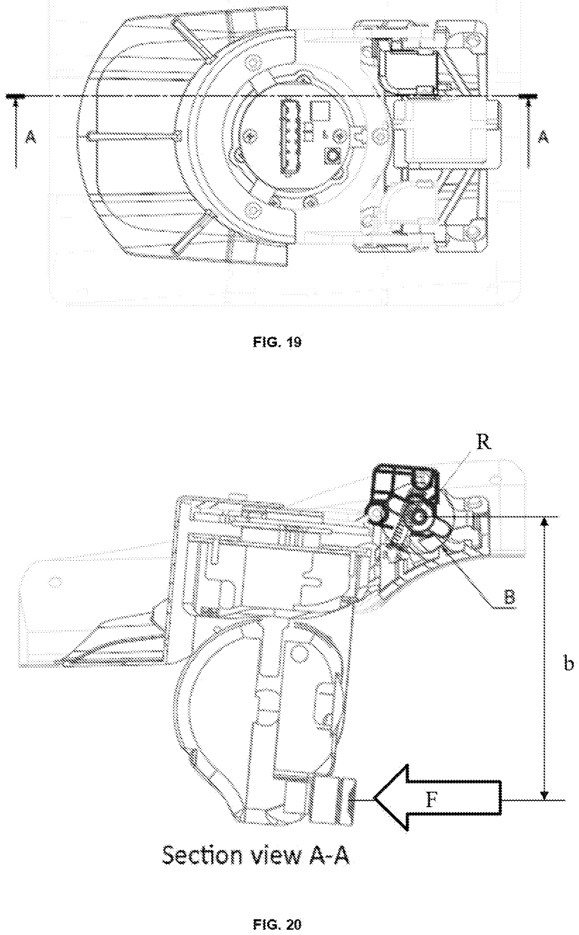

By way of example, an external stress is indicated by the arrow F in Figure 20. The stress can be associated with the energy released during the impact of the accessory element with an obstacle. In the case shown in the Figure, the stress F is applied at a distance or arm b from the axis of rotation of the rotating connection means.

The rotation of the rotating connection means 3, according to a first direction of rotation, describes an angle related to the reaction force of the springs, of such amplitude as to make the system completely retract within the underparts of the drone.

In other words, the effectiveness of the system is not based on the application of a specific force in one point, although on the ability of the system to react to an impact (collision) in the same point, generating a movement greater of angle than that of an application of a static force.

Correspondingly, the elastic return means 4 is configured in such a way that at an impact (force), of an entity considered significant for the given accessory system, the aforementioned rotation of the rotating connection means 3 causes the same to move from a first rest position to a first unstable equilibrium position.

The elastic return means 4 is further configured in such a way that, when in the first position of unstable equilibrium, it spontaneously moves into the second stable equilibrium position. This is possible thanks to the fact that the elastic return means 4 is preloaded, and does not completely discharge the elastic energy when it reaches the rest positions.

Furthermore, this behaviour of the elastic return means 4 is allowed by the careful selection of the position in which the first and second terminal ends are respectively connected to the rotating connection means 3 and to the second portion of frame 6.

The rotating connection means 3 is configured to rotate further, according to the first direction of rotation, dragged by the elastic return means 4 which moves into the second stable equilibrium position. The configuration of system 1 is such that the rotation of the rotating connection means 3, which reach the retracted second position, determines the corresponding movement of the housing module 2, which is moved into retracted configuration.

In accordance with the above, the support system 1 comprises elastic return means 4 and rotating connection means 3 configured and arranged in such a way as to create a movement mechanism of the housing module 2 that can be activated passively. In the context of this discussion, passive activation means an activation disengaged by an active command or control signal provided by a user, although determined by the application of a force or external stress acting on the housing module 2 itself, which has an intensity higher than a predetermined threshold (which can be prior fixed and depend, for example, on the type of accessory system to be moved) and/or predetermined direction of application.

According to a first preferred variant embodiment of the invention, the passive activation is determined mechanically by the action of the aforementioned external stress, which is apt to cause the movement of the support module 2.

The elastic return means is apt to assume a first fixed position when the housing module is in extracted configuration and a second fixed position when the housing module is in retracted configuration, in which such fixed first and second positions coincide with respective locking or stop positions of the first terminal end of the elastic return means 4. In particular, the elastic return means settles on respective limit stop elements 8 and 9 at the aforementioned positions, however it preferably maintains a predetermined pulling capacity, i.e. it does not completely discharge its energy elastic.

The limit stop elements 8 and 9 are mechanical elements, comprised in the system 1 and arranged in such a way as to prevent further movement of the housing module 2. The limit stop elements, in other words, rebated stop elements, which can further be present only on one side of the mechanism rather than both, depending on the loads exerted thereon and which require a verification of adequate strength.

Alternatively, this adjustment can be carried out by means of thicknesses or different mechanical adjustment systems.

In general terms, the configuration of the support assembly is such that when the housing module 2 is in an extracted configuration - with the elastic return means 4 in the first fixed position - and an external stress higher than a predetermined threshold value is applied thereto, the rotating connection means 3 is configured to rotate in accordance with a first direction of rotation, preferably substantially in agreement with the direction of application of the aforesaid force.

When the rotation of the rotating connection means 3 is greater than the first predetermined maximum angle y, the elastic feedback means 4 associated with it is moved from the first fixed position to a first position of unstable equilibrium.

The elastic return means 4 is configured in such a way that, when found in the aforementioned first position of unstable equilibrium, it tends to spontaneously move to the second fixed position, due to the preload applied thereto and the overall configuration of the assembly consisting of elastic return means 4 plus rotating connection means 3.

When the connection means 3 moves to the second fixed position, the housing module 2 associated therewith is moved by the same until it reaches the retracted configuration, and the accessory is therefore at least partially inserted into the drone.

When the housing module 2 is in the retracted configuration, to move it back into the extracted configuration it is necessary to operate the rotating connection means 3 according to a second direction of rotation, opposite to the first. The rotating connection means 3 is for this purpose operatively connected to traditional drive means, which can be of the electromechanical, hydraulic or pneumatic type.

When the rotation of the rotating connection means 3 is greater than a second predetermined maximum angle α, the elastic feedback means associated therewith is moved from the second fixed position to a second position of unstable equilibrium. The elastic return means is configured in such a way that, when it is in the aforementioned second position of unstable equilibrium, it tends to move to the first fixed position.

When the connection means is moved to the first fixed position, the housing module associated therewith is in the extracted configuration, and the accessory is therefore at least partially external to the drone.

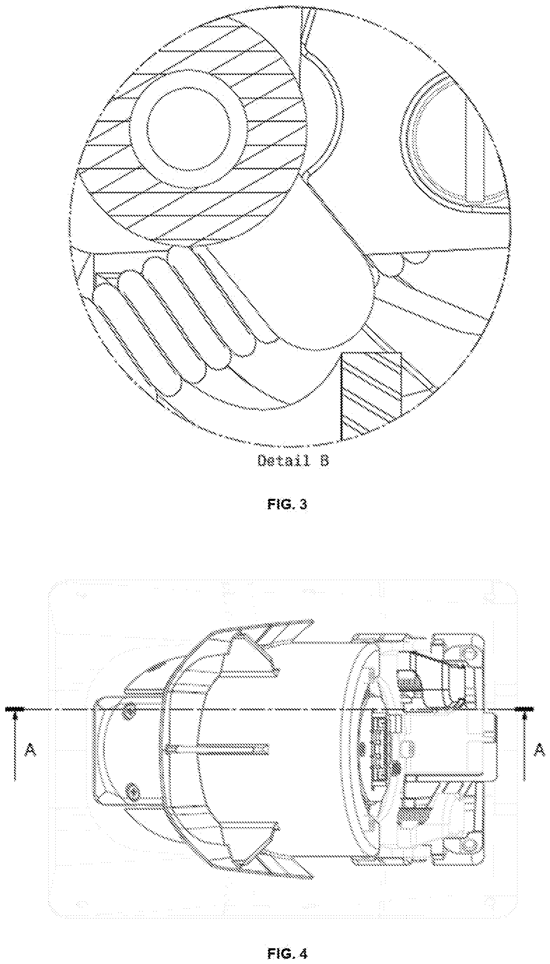

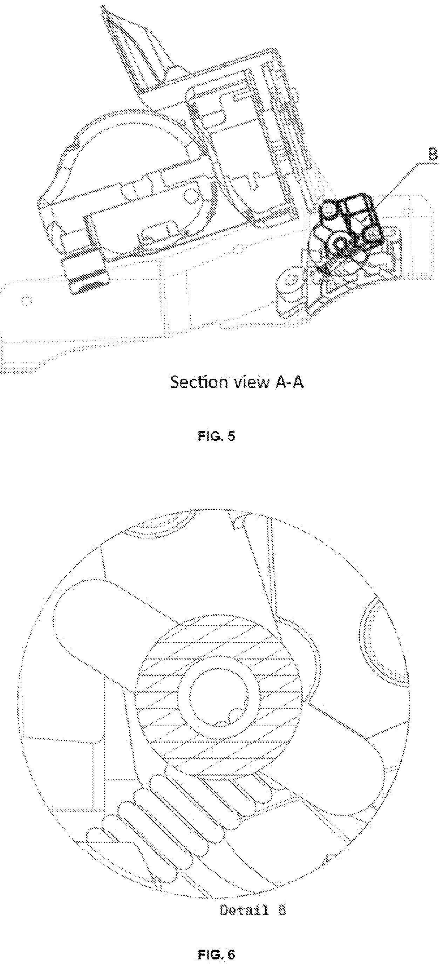

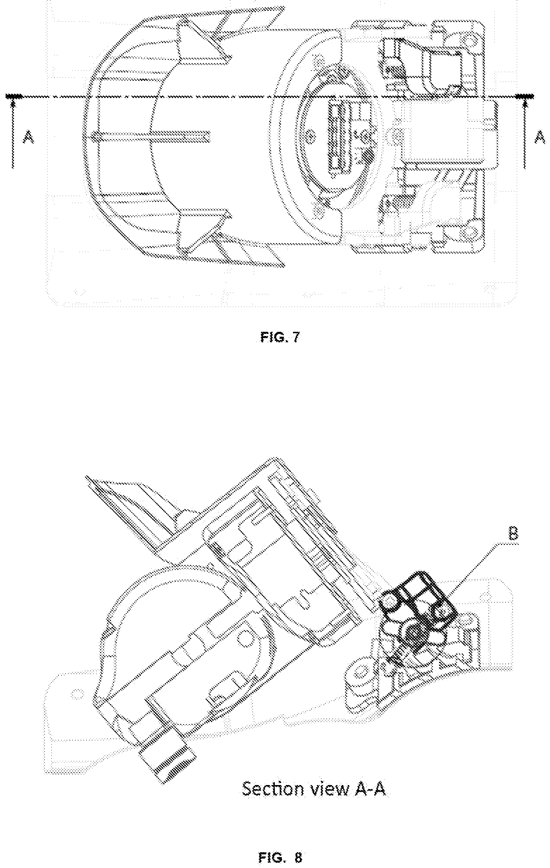

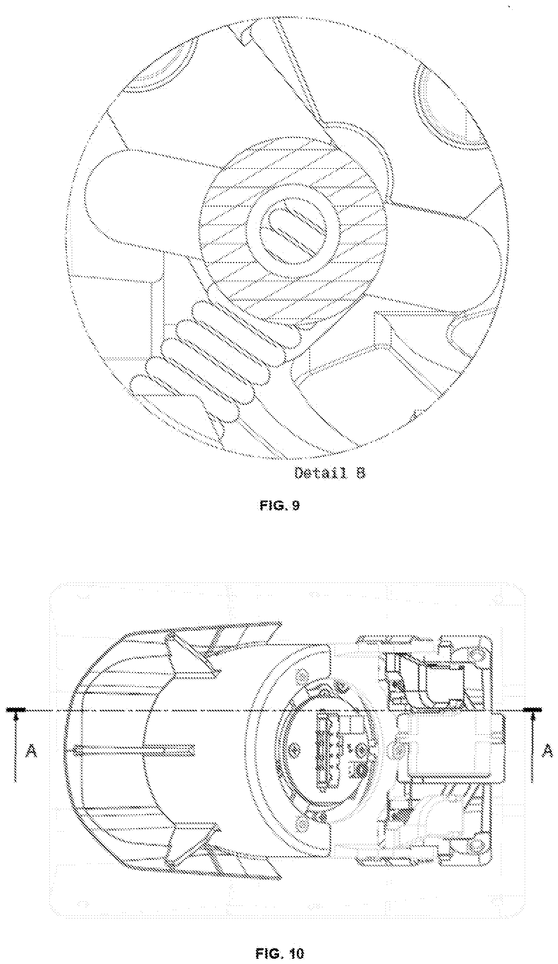

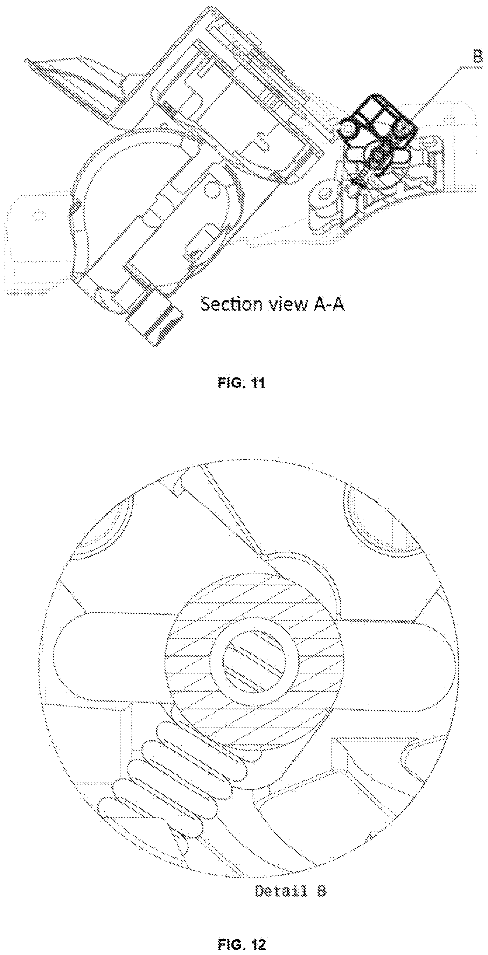

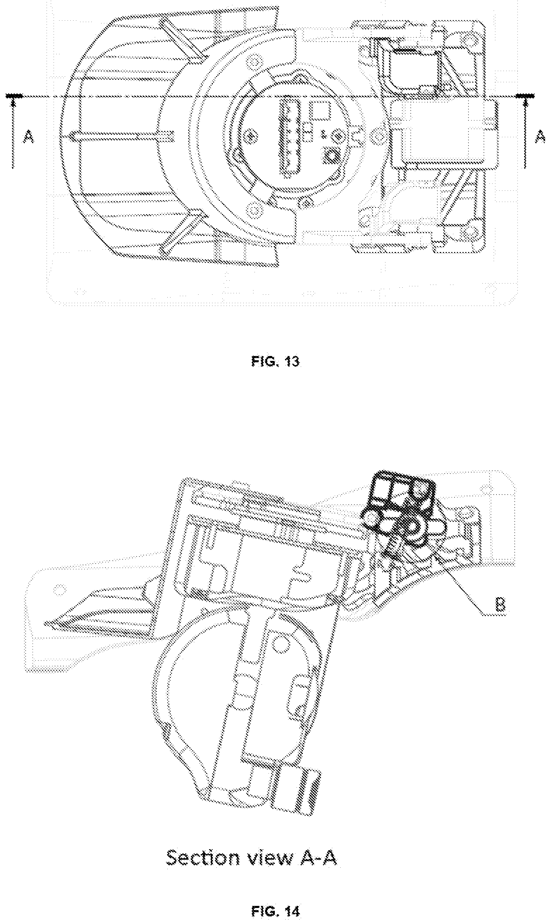

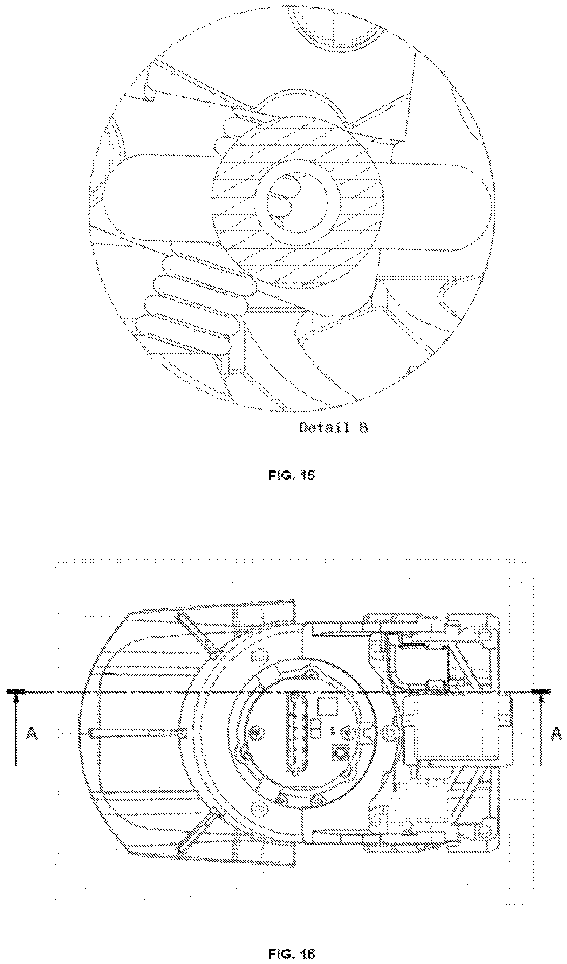

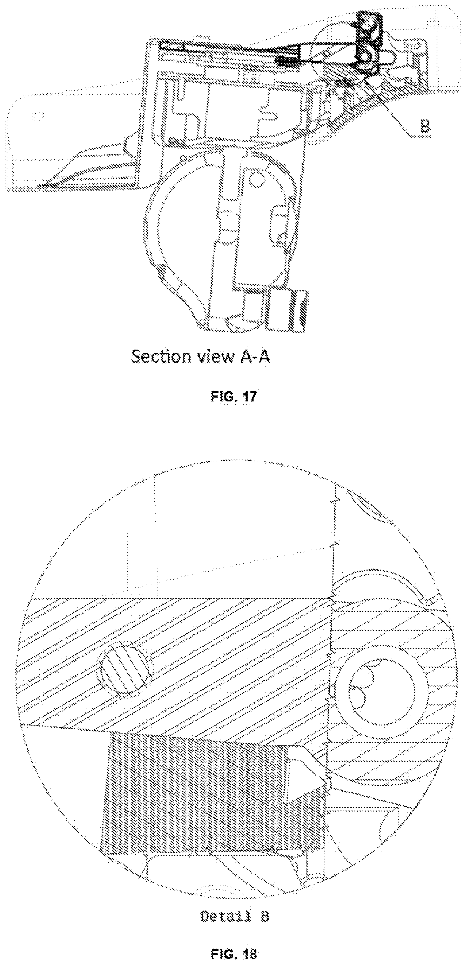

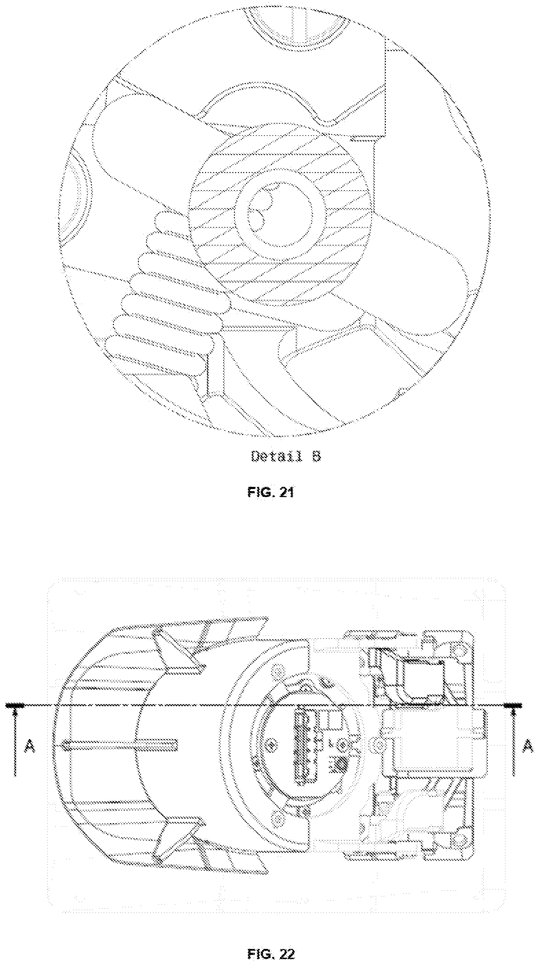

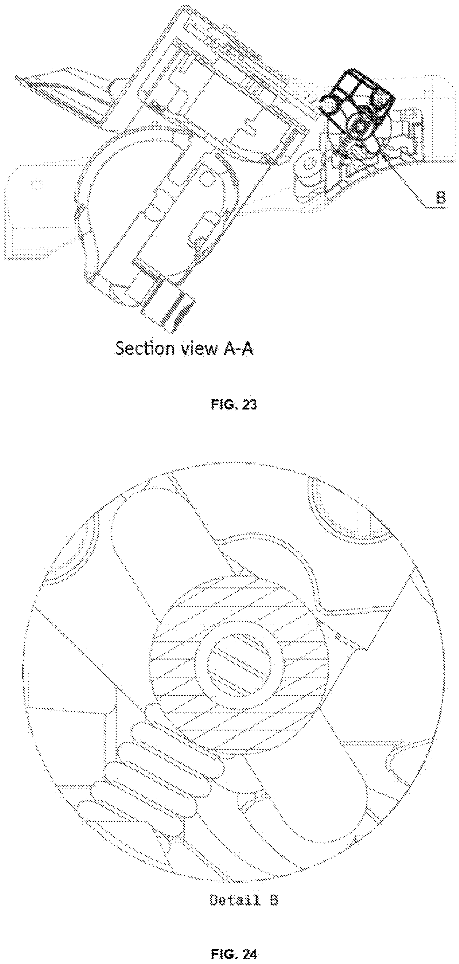

For clarity, Figures 1 to 36 show, in series, the configurations assumed by the system 1 of the invention in the transition from the minimum encumbrance configuration to that of maximum encumbrance, and vice versa. The same series is shown, by only three images, in Figures 43 to 45.

In accordance with a further variant of the invention, the movement of the rotating connection means 3 in both directions of rotation can also be delegated, in addition to what is described above, to drive means of the traditional type, for example comprising electromechanical mechanisms, pneumatic or hydraulic, manually controlled by a remote operator, or by a central unit in an automated manner.

The present invention has been hitherto described with reference to preferred embodiments. It is to be understood that other embodiments may exist that pertain to the same inventive core, as defined by the scope of the claims set forth below.

## Claims

1. A movable support system (1) of an accessory element (11), configured to be installable on a drone and comprising:
• a frame element (50) connectable to the drone fuselage;
• a housing module (2) comprising an operating surface (2) configured to couple with the accessory element (11), said housing module (2) being apt to assume an extracted configuration of maximum encumbrance and a retracted configuration of minimum encumbrance;
• rotating connection means (3) of said housing module (2) to said frame element (5), apt to assume a first position when said housing module (2) is in the extracted configuration and a second position when said module housing (2) is in the retracted configuration;
• elastic return means (4) operatively associated with said rotating connection means (3) and connected to the frame element (50), apt to assume a first rest position when said housing module (2) is in the extracted configuration and a second rest position when said housing module (2) is in the retracted configuration, said first and second rest positions coinciding with respective locking positions of said elastic return means (4);
the configuration of said system (1) being such that:
when said housing module (2) is in the extracted configuration and an external stress higher than a predetermined threshold value is applied to it, said rotating connection means (3) is configured to rotate according to a first direction of rotation of an angle (γ); said elastic return means (4) is configured in such a way that, at the aforesaid rotation of said rotating connection means (3), it passes from said first rest position to an unstable equilibrium position, said elastic return means (4) being further configured in such a way that, when it is in said unstable equilibrium position, it moves to said second rest position,
and wherein said rotating connection means (3) is configured to further rotate according to said first direction of rotation up to said second position when said elastic return means (4) moves to the second stable equilibrium position, and said module housing (2) is configured to go into a retracted configuration when said rotating connection means (3) moves to said second position.

2. The system (1) according to claim 1, wherein:
when said housing module (2) is in a retracted configuration, said operating surface (20) is oriented to form an operative angle (β) of minimum amplitude with said frame element (50), and when said housing module (2) it is in the extracted configuration, said operative angle (β) has a maximum amplitude, said operating angle (β) having an amplitude which increases in the passage of said housing module (2) from the retracted configuration to the extracted configuration.

3. The system (1) according to the preceding claim, in which the minimum amplitude of said operating angle (β) is equal to about 90° and/or the maximum amplitude of said operating angle (β) is equal to about 180°.

4. A drone comprising a mobile support system (1) according to one of the preceding claims.

## Patentansprüche

1. Ein bewegliches Trägersystem (1) eines Zubehörelements (11), das dazu eingerichtet ist, auf einer Drohne installiert zu werden, und Folgendes umfasst:
- ein Rahmenelement (50), das mit dem Drohnenrumpf verbindbar ist;
- ein Gehäusemodul (2), umfassend eine Betätigungsfläche (2), die dazu eingerichtet ist, mit dem Zubehörelement (11) zu koppeln, wobei das Gehäusemodul (2) dazu geeignet ist, eine ausgezogene Konfiguration mit maximaler Belastung und eine eingezogene Konfiguration mit minimaler Belastung anzunehmen;
- Drehverbindungsmittel (3) des Gehäusemoduls (2) mit dem Rahmenelement (50), die geeignet sind, eine erste Position anzunehmen, wenn das Gehäusemodul (2) in der ausgezogenen Konfiguration ist, und eine zweite anzunehmen, wenn das Modulgehäuse (2) in der eingezogenen Konfiguration ist;
- elastische Rückstellmittel (4), die funktionsfähig den Drehverbindungsmitteln (3) zugeordnet und mit dem Rahmenelement (50) verbunden sind, und die geeignet sind, eine erste Ruheposition anzunehmen, wenn das Gehäusemodul (2) in der ausgezogenen Konfiguration ist, und eine zweite Ruheposition, anzunehmen, wenn das Gehäusemodul (2) in der eingezogenen Konfiguration ist, wobei die erste und die zweite Ruheposition mit den jeweiligen Verriegelungspositionen der elastischen Rückstellmittel (4) zusammenfallen;
wobei die Konfiguration des Systems (1) derart ist, dass:
wenn das Gehäusemodul (2) in der ausgezogenen Konfiguration ist und eine äußere Belastung höher als ein vorbestimmter Schwellenwert auf es einwirkt, das Drehverbindungsmittel (3) dazu eingerichtet ist, sich gemäß einer ersten Drehrichtung um einen Winkel (γ) zu drehen; das elastische Rückstellmittel (4) dazu eingerichtet ist, bei der vorgenannten Drehung der Drehverbindungsmittel (3) von der ersten Ruheposition in eine instabile Gleichgewichtsposition überzugehen, wobei das elastische Rückstellmittel (4) ferner dazu eingerichtet ist, dass es sich, wenn es in der instabilen Gleichgewichtsposition ist, in die zweite Ruheposition bewegt,
und wobei die Drehverbindungsmittel (3) dazu eingerichtet sind, sich gemäß der ersten Drehrichtung weiter bis zu der zweiten Position zu drehen, wenn die elastischen Rückstellmittel (4) sich zu der zweiten stabilen Gleichgewichtsposition bewegen, und das Modulgehäuse (2) dazu eingerichtet ist, in eine zurückgezogene Konfiguration zu gehen, wenn die Drehverbindungsmittel (3) sich zu der zweiten Position bewegen.

2. System (1) gemäß Anspruch 1, wobei:
wenn das Gehäusemodul (2) in einer eingezogenen Konfiguration ist, die Arbeitsfläche (20) so orientiert ist, dass sie einen Arbeitswinkel (β) mit minimaler Amplitude mit dem Rahmenelement (50) ausbildet, und wenn das Gehäusemodul (2) in der ausgezogenen Konfiguration ist, der Arbeitswinkel (β) eine maximale Amplitude hat, wobei der Arbeitswinkel (β) eine Amplitude hat, die im Übergang des Gehäusemoduls (2) von der eingezogenen Konfiguration zur ausgezogenen Konfiguration zunimmt.

3. System (1) gemäß dem vorhergehenden Anspruch, bei dem die minimale Amplitude des Arbeitswinkels (β) gleich etwa 90° ist und/oder die maximale Amplitude des Arbeitswinkels (β) gleich etwa 180° ist.

4. Drohne, umfassend ein mobiles Trägersystem (1) gemäß einem der vorhergehenden Ansprüche.

## Revendications

1. Système (1) de support mobile d'un élément accessoire (11) configuré pour pouvoir être installé sur un drone et comprenant :
un élément de châssis (50) pouvant être raccordé au fuselage du drone ;
un module de logement (2) comprenant une surface opérationnelle (2) configurée pour se coupler avec l'élément accessoire (11), ledit module de logement (2) étant apte à adopter une configuration extraite d'encombrement maximum et une configuration rétractée d'encombrement minimum ;
un moyen de raccordement rotatif (3) dudit module de logement (2) audit élément de châssis (5), apte à adopter une première position lorsque ledit module de logement (2) est dans la configuration extraite et une seconde position lorsque ledit module de logement (2) est dans la configuration rétractée ;
un moyen de retour élastique (4) associé, de manière opérationnelle, avec ledit moyen de raccordement rotatif (3) et raccordé à l'élément de châssis (50), apte à adopter une première position de repos lorsque ledit module de logement (2) est dans la configuration extraite et une seconde position de repos lorsque ledit module de logement (2) est dans la configuration rétractée, lesdites première et seconde positions de repos coïncidant avec des positions de blocage respectives dudit moyen de retour élastique (4) ;
la configuration dudit système (1) étant telle que :
lorsque ledit module de logement (2) est dans la configuration extraite et qu'une sollicitation externe supérieure à une valeur de seuil prédéterminée est appliquée sur ce dernier, ledit moyen de raccordement rotatif (3) est configuré pour tourner selon une première direction de rotation d'un angle (γ) ; ledit moyen de retour élastique (4) est configuré de sorte que, à la rotation mentionnée précédemment dudit moyen de raccordement rotatif (3), il passe de ladite première position de repos à une position d'équilibre instable, ledit moyen de retour élastique (4) étant en outre configuré de sorte que, lorsqu'il est dans ladite position d'équilibre instable, il se déplace dans ladite seconde position de repos,
et dans lequel ledit moyen de raccordement rotatif (3) est configuré pour continuer à tourner selon ladite première direction de rotation jusqu'à ladite seconde position lorsque ledit moyen de retour élastique (4) se déplace dans la seconde position d'équilibre stable, et ledit module de logement (2) est configuré pour aller dans une configuration rétractée lorsque ledit moyen de raccordement rotatif (3) se déplace dans ladite seconde position.

2. Système (1) selon la revendication 1, dans lequel :
lorsque ledit module de logement (2) est dans une configuration rétractée, ladite surface opérationnelle (20) est orientée afin de former un angle opérationnel (β) d'amplitude minimum avec ledit élément de châssis (50), et lorsque ledit module de logement (2) est dans la configuration extraite, ledit angle opérationnel (β) a une amplitude maximum, ledit angle opérationnel (β) ayant une amplitude qui augmente lors du passage dudit module de logement (2) de la configuration rétractée à la configuration extraite.

3. Système (1) selon la revendication précédente, dans lequel l'amplitude minimum dudit angle opérationnel (β) est égale à environ 90° et/ou l'amplitude maximum dudit angle opérationnel (β) est égale à environ 180°.

4. Drone comprenant un système (1) de support mobile selon l'une des revendications précédentes.
